# EUROPÄISCHE PATENTSCHRIFT

(11) **EP 3 241 661 B1**
(45) Veröffentlichungstag und Bekanntmachung des Hinweises auf die Patenterteilung: **24.07.2019**
(21) Anmeldenummer: 17000553.2
(22) Anmeldetag: 04.04.2017
(51) Int. Cl.: B29C 45/83, B29C 45/66

(54) **SCHLIESSEINHEIT EINER KUNSTSTOFFVERARBEITUNGSMASCHINE, INSBESONDERE EINER SPRITZGIESSMASCHINE**
CLOSING UNIT OF A PLASTIC PROCESSING MACHINE, IN PARTICULAR AN INJECTION MOULDING MACHINE
UNITÉ DE FERMETURE D'UNE MACHINE DE TRAITEMENT DE MATIÈRE PLASTIQUE EN PARTICULIER MACHINE DE MOULAGE PAR INJECTION

(30) Priorität: 04.05.2016 DE 102016005573
(43) Veröffentlichungstag der Anmeldung: 08.11.2017
(73) Patentinhaber: Wittmann Battenfeld GmbH, 2542 Kottingbrunn (AT)
(72) Erfinder: Lechner, Andreas, A-2563 Pottenstein (AT); Schaly, Gerhard, A-2542 Kottingbrunn (AT); Pinter, Jürgen, A-7022 Schattendorf (AT)
(74) Vertreter: Gosdin, Michael

(56) Entgegenhaltungen:
- WO-A1-2005/077639
- WO-A1-2007/036243
- WO-A1-2007/036244
- AT-A4- 509 984
- DE-A1-102008 024 514
- JP-A- 2002 160 279

## Beschreibung

Die Erfindung betrifft eine Schließeinheit einer Kunststoffverarbeitungsmaschine, insbesondere einer Spritzgießmaschine, die mindestens eine Gelenkstelle umfasst, an der zwei Bauteile relativ zueinander um eine Achse verschwenkbar angeordnet sind, wobei die Gelenkstelle ein Wellenteil aufweist, das mit einem der Bauteile verbunden ist und das relativ zu dem anderen der Bauteile über mindestens ein Gleitlagerelement verschwenkbar gelagert ist.

Bei gattungsgemäßen Schließeinheiten insbesondere von Spritzgießmaschinen werden häufig Kniehebelschließmechanismen eingesetzt, die eine Anzahl der genannten Gelenkstellen aufweisen. Um einen dauerhaften und verschleißarmen Betrieb zu gewährleisten, muss eine hinreichende Schmierstoffversorgung der Lagerstellen sichergestellt sein. Im Stand der Technik sind daher mannigfaltige Lösungen beschrieben, um dieses Ziel zu erreichen.

Eine gattungsgemäße Schließeinheit einer Kunststoffverarbeitungsmaschine offenbart die AT 509 984 A4**.** Verbrauchtes Schmiermittel wird hier von der Gelenksstelle über ein Leitungssystem zu einem Aufnahmeraum für das verbrauchte Schmiermittel geführt, der durch ein tankförmiges Behältnis gebildet wird.

Die DE 10 2008 024 514 A1 offenbart eine Schmiervorrichtung für eine Spritzgießmaschine, bei der von den Schmierstellen eine Ablaufleitung für Schmiermittel wegführt, um verbrauchtes Schmiermittel zu entsorgen.

Eine andere Lösung ist in der DE 20 2011 105 842 U1 offenbart, bei der auf ein schmiermittelfreies Konzept abgestellt wird. Hier liegt bereits die wesentliche Zielsetzung zu Grunde, eine gattungsgemäße Schließeinheit bei einer Maschine beispielsweise für den Einsatz in einem Reinraum tauglich zu machen. Eine solche Lösung mit schmiermittelfreien Lagerstellen kann jedoch nicht bei jeder Anwendung ins Auge gefasst werden.

Bei einem solchen Anwendungsfall ist es sehr störend, wenn Schmiermittel, das zur Schmierung der Lagerstellen benötigt wird, austritt und entsorgt werden muss. Hier kann es insbesondere bei Öl-Tropfenbildung zu einer Zerstäubung von Öl kommen, was bei Reinraumanwendungen problematisch bzw. nicht akzeptabel ist.

Es sind daher auch Systeme bekannt geworden, bei denen bei Einsatz von Schmiermittel mittels einer Druckumlaufschmierung oder mittels einer drucklosen Ölrückführung zu einem Auffangbehälter der Verschmutzungsgrad der Maschine reduziert werden soll. Eine solche Lösung offenbart die WO 2005/077639 A1**.** Um die Schmierung unter allen Betriebszuständen sicherzustellen und die Schmierwirkung der Kniehebel-Lagerstellen zu gewährleisten, dabei allerdings gleichzeitig den Leckölaustritt zu reduzieren, ist bei der genannten Lösung vorgesehen, dass die hochbelasteten Lagerstellen der Gelenke eine Umlaufschmierung aufweisen, die unabhängig von der Schmiermittelversorgung für die übrigen verlustbehafteten Lagerstellen als geschlossener Schmiermittelförderkreis ausgebildet ist. Nachteilig ist hier, dass sie einen umfassend abgedichteten Kniehebel benötigten, was sich sehr negativ auf die Kosten und auf die Baugröße der Maschine auswirkt.

Weitere ähnliche Lösungen zeigen die WO 2007/036243 A1**,** die WO 2007/036244 A1 und die JP 2002 160279 A**.**

Der Erfindung liegt daher die **Aufgabe** zugrunde, eine Schließeinheit der eingangs genannten Art so fortzubilden, dass es möglich wird, in kostengünstiger Weise noch zuverlässiger einen sauberen Betrieb der Einheit und damit der Maschine zu gewährleisten. Es soll also insbesondere eine Schließeinheit geschaffen werden, die hohe Anforderungen an einen geringen Verschmutzungsgrad erfüllt.

Die **Lösung** dieser Aufgabe durch die Erfindung ist in Verbindung mit den eingangs genannten Merkmalen dadurch gekennzeichnet, dass die Gelenkstelle weiter aufweist:
- mindestens eine Schmiermittelzuführleitung in einem der Bauteile, die von der Umgebung durch das Bauteil zum Gleitlagerelement führt,
- mindestens einen Aufnahmeraum für verbrauchtes Schmiermittel, das im Wellenteil ausgebildet ist, wobei der Aufnahmeraum durch eine Bohrung im Wellenteil gebildet wird,
- mindestens eine Schmiermittelabführleitung im Wellenteil, die vom Gleitlagerelement zum Aufnahmeraum führt,
wobei zwischen dem Aufnahmeraum und der Umgebung Mittel zum Ausgleich eines Differenzdrucks angeordnet sind, wobei die Mittel zum Ausgleich eines Differenzdrucks durch eine Schraube oder einen Stopfen gebildet werden, der im axial endseitigen Bereich des Aufnahmeraums angeordnet ist, wobei die Schraube oder der Stopfen mindestens eine Entlüftungsbohrung aufweist.

Bei dem besagten Differenzdruck handelt es sich um die Druckdifferenz zwischen dem Inneren des Aufnahmeraums und der Umgebung. Der Differenzdruck muss dabei nicht vollständig ausgeglichen werden, es ist generell ausreichend, wenn bei einem entsprechenden Schwellenwert für den Differenzdruck Luft aus dem Aufnahmeraum in die Umgebung entweichen kann, so dass die Nachschmierung der Lagerstelle nicht behindert ist.

Das Gleitlagerelement umfasst bevorzugt eine hohlzylindrisch ausgebildete Lagerhülse.

Der Raum zwischen dem einen Bauteil und dem Wellenteil, in dem sich das Gleitlagerelement befindet, ist bevorzugt durch Dichtungselemente abgedichtet, wobei sich die Dichtungselemente in den beiden axialen Endbereichen des Gleitlagerelements befinden.

Der Aufnahmeraum wird bevorzugt durch eine Zentralbohrung im Wellenteil gebildet (die also konzentrisch zur Achse angeordnet ist).

Vorgesehen kann auch werden, dass im Bereich der Entlüftungsbohrung ein Rückschlagventil angeordnet ist; das Rückschlagventil weist dabei vorzugsweise einen Öffnungsdruck zwischen 0,2 und 2,0 bar auf.

Die mindestens eine Schmiermittelzuführleitung im Bauteil und die mindestens eine Schmiermittelabführleitung im Wellenteil sind dabei vorzugsweise - bezogen auf den Aufnahmeraum - in sich gegenüberliegenden Bereichen angeordnet. Hiermit wird eine vollständige Schmierung des Gleitlagerelements bei der (Nach)Schmierung gewährleistet.

In der Schmiermittelabführleitung kann gleichermaßen ein Rückschlagventil angeordnet sein, wobei das Rückschlagventil vorzugsweise einen Öffnungsdruck zwischen 0,2 und 2,0 bar aufweist.

Das Wellenteil kann ein Schauglas umfassen, das einen Blick in den Aufnahmeraum gewährt. Damit kann in einfacher Weise geprüft werden, ob sich noch genügend Raum im Aufnahmeraum befindet, um verbrauchten Schmierstoff aufzunehmen.

Alternativ oder additiv kann vorgesehen sein, dass das Wellenteil einen Füllstandssensor umfasst, der den Füllungsgrad des Aufnahmeraums mit Schmiermittel erfassen kann.

Somit wird nach der vorliegenden Erfindung eine saubere Gleitlagerlösung insbesondere für eine Kniehebelschließeinheit bereitgestellt, die auch für Reinraumanwendungen zuverlässig verwendet werden kann.

Betreffend die Ausgestaltung des Gleitlagerelements wird ausdrücklich auf die DE 20 2011 105 842 U1 Bezug genommen, wo hierzu verschiedene Angaben zu finden sind, insbesondere was die Struktur des Gleitlagerelements und die zum Einsatz kommenden Materialien anbelangt.

Die Schließeinheit ist dabei insbesondere als eine solche mit Kniehebelschließmechanismus ausgebildet.

Die besonderen Vorteile der vorgeschlagenen Lösung liegen darin, dass ein sehr hoher Sauberkeitsgrad der Schließeinheit gewährleistet werden kann, ohne hierfür einen übermäßigen Kostenaufwand treiben zu müssen. So kann beispielsweise eine Maschine für Reinräume bereitgestellt werden, die sich durch einen sehr einfachen Aufbau der Kniehebellagerung auszeichnet und kostengünstig ist.

Mittels der vorgeschlagenen Lösung ist also eine absolut saubere Abdichtung aller Gelenksstellen an einer Kniehebelschließeinheit möglich. Der verbrauchte Schmierstoff wird zur einfachen Entsorgung aufgespeichert. Es muss für die komplette Einsatzdauer der Maschine keinerlei Wartung durchgeführt werden. Das komplette Schmiersystem entspricht einer Lebensdauerschmierung, wobei als besonderer Vorteil eine Erneuerung des verbrauchten Fettes gewährleistet wird. All das ist bei geringeren Kosten als bei vorbekannten Systemen möglich (beispielsweise bei Systemen mit einer drucklosen Ablaufleitung oder einer aufwendigen und somit teuren Druckumlaufschmierung).

In der Zeichnung ist ein Ausführungsbeispiel der Erfindung dargestellt. Es zeigen:
- Fig. 1: eine Schließeinheit einer Spritzgießmaschine in der Seitenansicht,
- Fig. 2: den Radialschnitt durch eine Gelenksstelle der Schließeinheit und
- Fig. 3: die Einzelheit "X" gemäß Fig. 2.

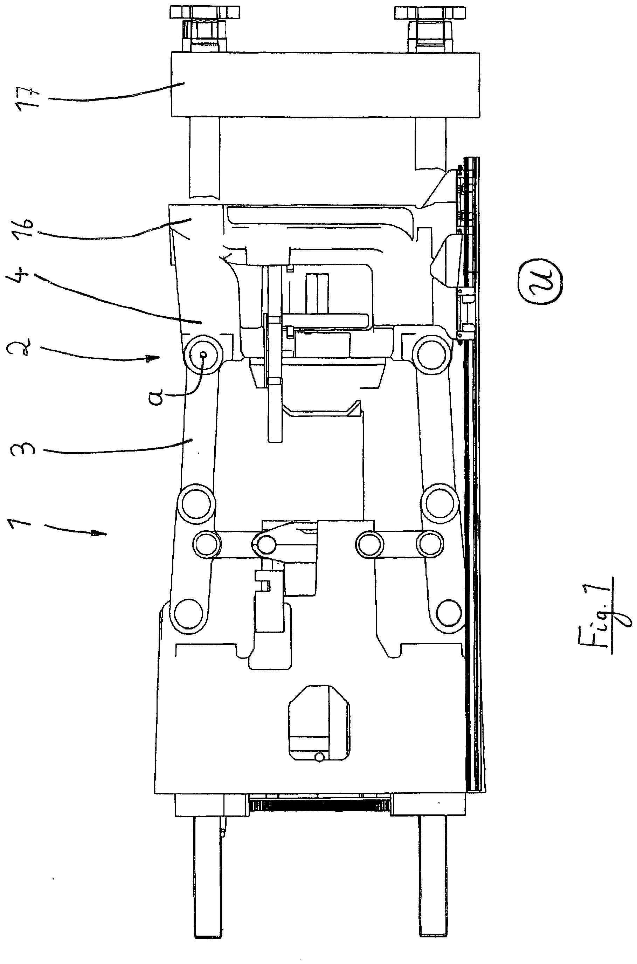

In Fig. 1 ist eine Schließeinheit 1 einer Spritzgießmaschine dargestellt, die in an sich bekannter Weise aufgebaut ist. Um eine verschiebliche Werkzeugaufspannplatte 16 relativ zu einer festen Werkzeugaufspannplatte 17 zu verschieben, ist der dargestellte Kniehebelmechanismus vorgesehen. Dieser weist in bekannter Weise eine Anzahl von Gelenkstellen 2 auf, von denen nur eine in den Figuren näher dargestellt bzw. nachfolgend diskutiert ist; allerdings kommt die vorgeschlagene Lösung grundsätzlich an allen Lager- bzw. Gelenkstellen zum Einsatz.

Eine Gelenkstelle erlaubt, dass zwei hier zusammentreffende Bauteile 3 und 4, d. h. Hebelteile des Kniehebelmechanismus, relativ zueinander um eine Achse a verschwenkbar sind; diese Achse steht in Fig. 1 senkrecht auf der Zeichenebene. Jede Gelenkstelle 2 umfasst ein Wellenteil 5, das in Aufnahmebohrungen von laschenartigen Abschnitten des einen Bauteils eingeschoben ist.

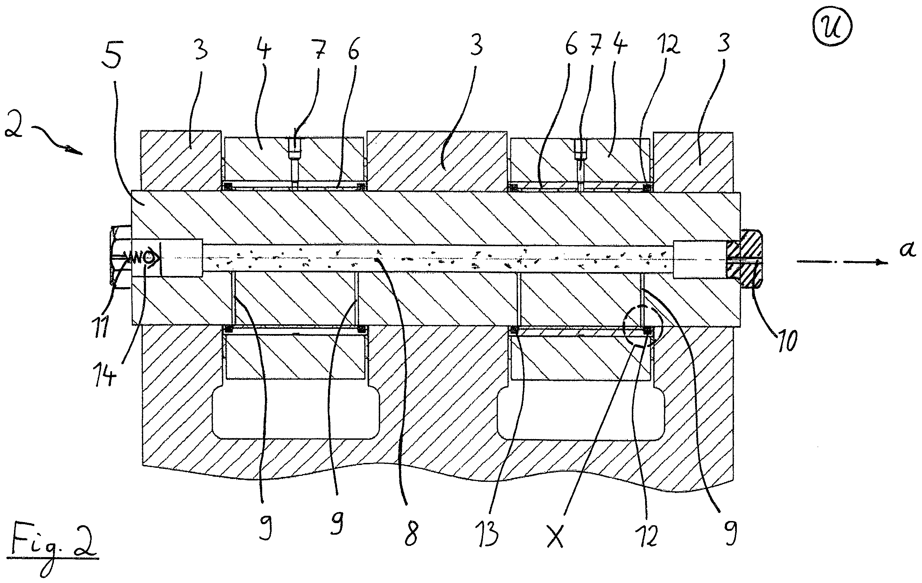

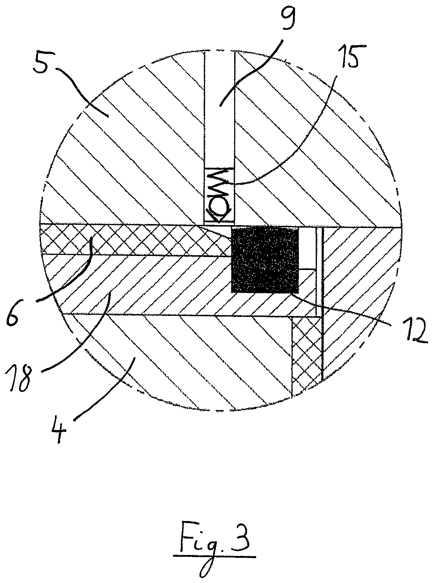

Zwischen dem Wellenteil 5 und den (laschenartigen) Abschnitten des Bauteils 4 wird, wie in Figur 2 gesehen werden kann, ein hohlzylindrischer Raum gebildet, in dem ein Gleitlagerelement 6 angeordnet ist. Dabei kann (siehe hierzu das Detail gemäß Figur 3) das Gleitlagerelement 6 auf einer Zwischenhülse 18 angeordnet sein, die im Bauteil 4 platziert ist. Das Gleitlagerelement 6 ist dabei hinreichend mit Schmiermittel zu versorgen, wozu die weiter dargestellte Struktur vorgesehen ist,

Im Bauteil 4 sind Schmiermittelzuführleitungen 7 eingearbeitet, die beispielsweise zum Ansetzen einer Schmierstoffpresse ausgebildet sind. Die Schmiermittelzuführleitung 7 verläuft durch das Bauteil 4 in radiale Richtung bis zum Gleitlagerelement 6, wobei durch die axial zentrische Anordnung eine gleichmäßige Versorgung des Gleitlagerelements 6 mit Schmierstoff sichergestellt ist. Vom Gleitlagerelement 6 führen pro Lagerstelle im Ausführungsbeispiel zwei Schmiermittelabführleitungen 9 weg, um aus dem Gleitlagerelement 6 verbrauchten Schmierstoff zu entsorgen. Die Schmiermittelabführleitungen 9 führen zu einem Aufnahmeraum 8, der als Zentralbohrung im Wellenteil 5 ausgebildet ist. Damit bei der Nachschmierung über die Schmiermittelzuführleitung 7 der Schmierstoff nicht den für seine Wirkung vorgesehenen Bereich verlässt, ist das Gleitlagerelement 6 in beiden axialen Endbereichen mit je einem Dichtungselement 12 bzw. 13 versehen.

Zwischen dem Aufnahmeraum 8 und der Umgebung U sind Mittel 10 bzw. 11 (gezeigt sind in Fig. 2 zwei Varianten der vorgeschlagenen Lösung) zum Ausgleich eines Differenzdrucks angeordnet, der sich zwischen dem Aufnahmeraum 8 und der Umgebung U bilden kann, wenn neues Schmiermittel über die Schmiermittelzuführleitung 7 zugeführt wird. Damit durch einen Überdruck im Aufnahmeraum 8 die Zufuhr von Schmiermittel nicht behindert wird, entlüften die Mittel 10, 11 den Aufnahmeraum 8; in dem Maße, in dem Luft aus dem Aufnahmeraum 8 entweicht, kann der Aufnahmeraum 8 verbrauchtes Schmiermittel aufnehmen.

Die Mittel 10, 11 können als Schraube ausgebildet sein, die in ein Gewinde eingeschraubt ist, wobei die Schraube im axialen Endbereich des Aufnahmeraums 8 und namentlich dort in einem im Durchmesser vergrößerten Abschnitt der Zentralbohrung angeordnet ist (siehe Figur 2). Eine Entlüftungsbohrung in der Schraube erlaubt besagten Druckausgleich.

Wie im Beispielsfalle des Mittels 11 in Figur 2 zu erkennen ist, kann im Bereich der Entlüftungsbohrung auch ein Rückschlagventil 14 vorgesehen werden, so dass ein geringfügiger Überdruck im Aufnahmeraum 8 bestehen kann, der allerdings nicht störend ist und insbesondere die Nachschmierung nicht behindert.

In ähnlicher Weise kann auch in der Schmiermittelabführleitung 9 ein Rückschlagventil 15 platziert werden, wie es Figur 3 zeigt. Dieses Rückschlagventil stellt verbessert sicher, dass Schmierstoff aus dem Bereich des Gleitlagerelements 6 nicht unerwünscht entweichen kann.

Die Erfindung stellt also auf eine Gleitlagerbüchse (Gleitlagerelement) 6 für die Gelenkstelle 2 ab, die in beiden axialen Endbereichen mit herkömmlichen Dichtungselementen 12, 13 versehen ist. Schmiermittel wird durch im Bauteil 4 bezogen auf das Gleitlagerelement 6 mittig angeordnete Schmiermittelzuführleitung 7 zugeführt, wobei als Schmierstoff sowohl Öl als auch Schmierfett infrage kommt; bevorzugt wird Fließfett eingesetzt.

Das Bauteil 3 trägt das Wellenteil 5, das mit einer mittigen großen Längsbohrung ausgestattet ist, die den Aufnahmeraum 8 bildet und somit als Speicherbehälter für den verbrauchten Schmierstoff fungiert, der durch die Schmiermittelabführleitungen 9 (Querbohrungen) aus den einzelnen Lagerstellen abgeleitet wird.

Der Aufnahmeraum 8 im Wellenteil 5 kann mit einer Verschlussschraube 10 mit einer mittigen Entlüftungsbohrung abgeschlossen sein; möglich ist auch eine Entlüftungsschraube 11 mit Rückschlagventil 14, wobei bevorzugt ein Öffnungsdruck zwischen ca. 0,2 und 2 bar vorgesehen ist. Damit wird erreicht, dass beim Nachschmieren die Luft aus dem System und insbesondere aus dem Aufnahmeraum 8 in die Umgebung U entweichen kann.

Um den Schmierstoff sicher in der Lagerstelle, d. h. im Gleitlagerelement 6 bis zur nächsten Nachschmierung zu halten, kann in der Schmiermittelabführleitung 9 ein zusätzliches Rückschlagventil 15 eingesetzt werden, ebenfalls bevorzugt mit einem Öffnungsdruck zwischen 0,2 und 2 bar.

Die Funktion der Vorrichtung ist wie folgt:
Alle Lagerstellen mit jeweiligen Gleitlagerelementen 6 sind bevorzugt aneinander gereiht. Durch die Schmiermittelzuführleitung 7 wird das Gleitlagerelement 6 komplett mit Fett gefüllt. Durch die beidseitig angeordneten Dichtungselemente 12, 13 (ausgeführt als Standard-Dichtungen) wird ein Fettaustritt nach außen über die Lagerstelle hinaus verhindert. Der Schmierstoff bleibt dadurch als Dauerschmierung in der Lagerstelle, also im Gleitlagerelement 6, da das Rückschlagventil 15 ein Abfließen in den Aufnahmeraum 8, also in die Sammelbohrung, verhindern.

Um den geringen Schmierstoffverlust durch den Fettabbau bzw. die natürliche thermische Alterung ausgleichen zu können, ist eine Nachschmierung je nach Betriebsbedingungen in einem Intervall von etwa 2 bis 6 Monaten vorgesehen, so dass immer neuer Schmierstoff die ausreichende Schmierung der Lagerstelle gewährleistet.

Als Schmierstoffgeber für die Schmiermittelzuführleitung 7 kann vorgesehen sein, über eine händische Schmiervorrichtung, über eine Schmierstoffpumpe oder über einen elektrisch überwachten Schmierstoffgeber die Lagerstelle mit neuem Schmierstoff zu versorgen.

Um den Schmierstoff beim Nachschmieren durch die Schmiermittelzuführleitung 7 in die abgedichtete Lagerstelle fördern zu können, sind die Mittel 10, 11 zum Ausgleich eines Differenzdrucks fluidisch mit dem Aufnahmeraum 8 verbunden. Hiermit kann, wenn der Druck im Aufnahmeraum 8 höher ist als der Umgebungsdruck, Luft aus dem Aufnahmeraum 8 in die Umgebung U ausströmen. Das zuverlässige Befüllen des Gleitlagerelements 6 mit Schmierstoff ist somit sichergestellt.

Die Größe bzw. das Volumen des Aufnahmeraums 8, also des Sammelbehälters, ist so bemessen, dass während einer durchschnittlichen Betriebsdauer der Maschine von ca. 15 Jahren das Volumen ausreicht, um den verbrauchten Schmierstoff aufnehmen zu können.

Durch Demontage der Entlüftungsschrauben 10, 11 kann allerdings im gegebenen Falle auch sehr einfach der Aufnahmeraum 8 in Form der Bohrung auch bei vollständiger Befüllung mit geringem Zeitaufwand während einer standardmäßigen Wartung der Maschine gereinigt bzw. entleert werden.

Zur Visualisierung des Füllgrades des Aufnahmeraums 8 kann das Wellenteil 5, das die Längsbohrung 8 aufweist, mit einem Schauglas oder mit einem Füllstandsensor für eine elektrische Überwachung versehen werden.

### Bezugszeichenliste:

- 1: Schließeinheit
- 2: Gelenkstelle
- 3: Bauteil
- 4: Bauteil
- 5: Wellenteil
- 6: Gleitlagerelement
- 7: Schmiermittelzuführleitung
- 8: Aufnahmeraum
- 9: Schmiermittelabführleitung
- 10: Mittel zum Ausgleich eines Differenzdrucks
- 11: Mittel zum Ausgleich eines Differenzdrucks
- 12: Dichtungselement
- 13: Dichtungselement
- 14: Rückschlagventil
- 15: Rückschlagventil
- 16: verschiebliche Werkzeugaufspannplatte
- 17: feste Werkzeugaufspannplatte
- 18: Zwischenhülse

- a: Achse
- U: Umgebung

## Patentansprüche

1. Schließeinheit (1) einer Kunststoffverarbeitungsmaschine, insbesondere einer Spritzgießmaschine, die mindestens eine Gelenkstelle (2) umfasst, an der zwei Bauteile (3, 4) relativ zueinander um eine Achse (a) verschwenkbar angeordnet sind, wobei die Gelenkstelle (2) ein Wellenteil (5) aufweist, das mit einem der Bauteile (3) verbunden ist und das relativ zu dem anderen der Bauteile (4) über mindestens ein Gleitlagerelement (6) verschwenkbar gelagert ist,
**dadurch gekennzeichnet, dass**
die Gelenkstelle (2) aufweist:
- mindestens eine Schmiermittelzuführleitung (7) in einem der Bauteile (4), die von der Umgebung (U) durch das Bauteil (4) zum Gleitlagerelement (6) führt,
- mindestens einen Aufnahmeraum (8) für verbrauchtes Schmiermittel, das im Wellenteil (5) ausgebildet ist, wobei der Aufnahmeraum (8) durch eine Bohrung im Wellenteil (5) gebildet wird,
- mindestens eine Schmiermittelabführleitung (9) im Wellenteil (5), die vom Gleitlagerelement (6) zum Aufnahmeraum (8) führt,
wobei zwischen dem Aufnahmeraum (8) und der Umgebung (U) Mittel (10, 11) zum Ausgleich eines Differenzdrucks angeordnet sind, wobei die Mittel (10, 11) zum Ausgleich eines Differenzdrucks durch eine Schraube oder einen Stopfen gebildet werden, der im axial endseitigen Bereich des Aufnahmeraums (8) angeordnet ist, wobei die Schraube oder der Stopfen mindestens eine Entlüftungsbohrung aufweist.

2. Schließeinheit nach Anspruch 1, **dadurch gekennzeichnet, dass** das Gleitlagerelement (6) eine hohlzylindrisch ausgebildete Lagerhülse umfasst.

3. Schließeinheit nach Anspruch 1 oder 2, **dadurch gekennzeichnet, dass** der Raum zwischen dem einen Bauteil (4) und dem Wellenteil (5), in dem sich das Gleitlagerelement (6) befindet, durch Dichtungselemente (12, 13) abgedichtet ist, wobei sich die Dichtungselemente (12, 13) in den beiden axialen Endbereichen des Gleitlagerelements (6) befinden.

4. Schließeinheit nach einem der Ansprüche 1 bis 3, **dadurch gekennzeichnet, dass** im Bereich der Entlüftungsbohrung ein Rückschlagventil (14) angeordnet ist, wobei das Rückschlagventil (14) vorzugsweise einen Öffnungsdruck zwischen 0,2 und 2,0 bar aufweist.

5. Schließeinheit nach einem der Ansprüche 1 bis 4, **dadurch gekennzeichnet, dass** die mindestens eine Schmiermittelzuführleitung (7) im Bauteil (4) und die mindestens eine Schmiermittelabführleitung (9) im Wellenteil (5) bezogen auf den Aufnahmeraum (8) in sich gegenüberliegenden Bereichen angeordnet sind.

6. Schließeinheit nach einem der Ansprüche 1 bis 5, **dadurch gekennzeichnet, dass** in der Schmiermittelabführleitung (9) ein Rückschlagventil (15) angeordnet ist, wobei das Rückschlagventil (15) vorzugsweise einen Öffnungsdruck zwischen 0,2 und 2,0 bar aufweist.

7. Schließeinheit nach einem der Ansprüche 1 bis 6, **dadurch gekennzeichnet, dass** das Wellenteil (5) ein Schauglas umfasst, das einen Blick in den Aufnahmeraum (8) gewährt.

8. Schließeinheit nach einem der Ansprüche 1 bis 6, **dadurch gekennzeichnet, dass** das Wellenteil (5) einen Füllstandssensor umfasst, der den Füllungsgrad des Aufnahmeraums (8) mit Schmiermittel erfassen kann.

## Claims

1. Clamping unit (1) of a plastics processing machine, in particular of an injection moulding machine, which comprises at least one joint (2) at which two parts (3, 4) are arranged so as to be pivotable relative to one another about an axis (a), wherein the joint (2) comprises a shaft (5) which is connected to one of the parts (3) and which is mounted so as to be pivotable relative to the other of the parts (4) via at least one plain bearing (6),
**characterized in that**
the joint (2) comprises:
- at least one lubrication feed conduct (7) in one of the parts (4), which leads from the environment (U) through the part (4) to the plain bearing (6),
- at least one reception chamber (8) for used lubricant, which is formed in the shaft (5), wherein the reception chamber (8) is formed by a bore in the shaft (5),
- at least one lubrication discharge conduct (9) in the shaft (5), which guides from the plain bearing (6) to the reception chamber (8),
wherein means (10, 11) for equalizing of a difference pressure are arranged between the reception chamber (8) and the environment (U), wherein the means (10, 11) for equalizing of a difference pressure are formed by a screw or a plug which is arranged in the axially end-side region of the reception chamber (8), wherein the screw or the plug has at least one vent bore.

2. Clamping unit according to claim 1, **characterized in that** the plain bearing (6) comprises a hollow-cylindrical bearing sleeve.

3. Clamping unit according to claim 1 or 2, **characterized in that** the space between the one part (4) and the shaft (5), in which the plain bearing (6) is located, is sealed by sealing elements (12, 13), wherein the sealing elements (12, 13) are located in the two axial end regions of the plain bearing (6).

4. Clamping unit according to one of claims 1 to 3, **characterized in that** a non-return valve (14) is arranged in the region of the vent bore, wherein the non-return valve (14) preferably has an opening pressure between 0.2 and 2.0 bar.

5. Clamping unit according to one of claims 1 to 4, **characterised in that** the at least one lubrication feed conduct (7) is arranged in the part (4) and the at least one lubrication discharge conduct (9) is arranged in the shaft (5) in regions facing one another relative to the receiving space (8).

6. Clamping unit according to one of claims 1 to 5, **characterized in that** a non-return valve (15) is arranged in the lubrication discharge conduct (9), wherein the non-return valve (15) preferably has an opening pressure between 0.2 and 2.0 bar.

7. Clamping unit according to one of claims 1 to 6, **characterized in that** the shaft (5) comprises a sight glass which allows a view into the reception chamber (8).

8. Clamping unit according to one of claims 1 to 6, **characterized in that** the shaft (5) comprises a level sensor which can detect the degree of filling of the reception chamber (8) with lubricant.

## Revendications

1. Unité de fermeture (1) d'une machine de traitement de matière plastique, en particulier d'une machine de moulage par injection, qui comprend au moins un point d'articulation (2) au niveau duquel deux composants (3, 4) sont disposés de manière à pouvoir pivoter l'un par rapport à l'autre autour d'un axe (a), le point d'articulation (2) présentant une partie d'arbre (5) qui est raccordée à l'un des composants (3) et qui est supportée de manière à pouvoir pivoter par rapport à l'autre des composants (4) par le biais d'au moins un élément de palier lisse (6),
**caractérisée en ce que**
le point d'articulation (2) présente :
- au moins une conduite d'alimentation en lubrifiant (7) dans l'un des composants (4), qui conduit de l'environnement (U) à travers le composant (4) jusqu'à l'élément de palier lisse (6),
- au moins un espace de réception (8) pour le lubrifiant usagé, qui est réalisé dans la partie d'arbre (5), l'espace de réception (8) étant formé par un alésage dans la partie d'arbre (5),
- au moins une conduite d'évacuation de lubrifiant (9) dans la partie d'arbre (5), qui conduit depuis l'élément de palier lisse (6) jusqu'à l'espace de réception (8),
des moyens (10, 11) de compensation d'une différence de pression étant disposés entre l'espace de réception (8) et l'environnement (U), les moyens (10, 11) pour compenser une différence de pression étant formés par une vis ou un bouchon qui est disposé(e) dans la région du côté de l'extrémité axiale de l'espace de réception (8), la vis ou le bouchon présentant au moins un alésage de désaérage.

2. Unité de fermeture selon la revendication 1, **caractérisée en ce que** l'élément de palier lisse (6) comprend une douille palier réalisée sous forme cylindrique creuse.

3. Unité de fermeture selon la revendication 1 ou 2, **caractérisée en ce que** l'espace entre l'un des composants (4) et la partie d'arbre (5) dans laquelle se trouve l'élément de palier lisse (6) est étanchéifié par des éléments d'étanchéité (12, 13), les éléments d'étanchéité (12, 13) se trouvant dans les deux régions d'extrémité axiale de l'élément de palier lisse (6).

4. Unité de fermeture selon l'une quelconque des revendications 1 à 3, **caractérisée en ce qu'**un clapet antiretour (14) est disposé dans la région de l'alésage de désaérage, le clapet antiretour (14) présentant de préférence une pression d'ouverture comprise entre 0,2 et 2,0 bar.

5. Unité de fermeture selon l'une quelconque des revendications 1 à 4, **caractérisée en ce que** l'au moins une conduite d'alimentation en lubrifiant (7) dans le composant (4) et l'au moins une conduite d'évacuation de lubrifiant (9) dans la partie d'arbre (5) sont disposées par rapport à l'espace de réception (8) dans des régions opposées.

6. Unité de fermeture selon l'une quelconque des revendications 1 à 5, **caractérisée en ce qu'**un clapet antiretour (15) est disposé dans la conduite d'évacuation de lubrifiant (9), le clapet antiretour (15) présentant de préférence une pression d'ouverture comprise entre 0,2 et 2,0 bar.

7. Unité de fermeture selon l'une quelconque des revendications 1 à 6, **caractérisée en ce que** la partie d'arbre (5) comprend un verre d'inspection qui permet de regarder dans l'espace de réception (8).

8. Unité de fermeture selon l'une quelconque des revendications 1 à 6, **caractérisée en ce que** la partie d'arbre (5) comprend un capteur de niveau de remplissage qui peut détecter le degré de remplissage de l'espace de réception (8) avec du lubrifiant.
